# EUROPEAN PATENT SPECIFICATION

(11) **EP 2 601 864 B1**
(45) Date of publication and mention of the grant of the patent: **24.12.2014**
(21) Application number: 12193745.2
(22) Date of filing: 22.11.2012
(51) Int. Cl.: F16B 2/12, F21W 121/00, A47G 7/04, F21V 21/088

(54) **Assembly comprising a rain gutter and a device for suspending an object from said rain gutter and use of said device**
Anordnung umfassende eine Regenrinne und eine Vorrichtung zum Aufhängen eines Objekts an der Regenrinne und Verwendung solch einer Vorrichtung
Ensemble comprenant une gouttière et un dispositif pour suspendre un objet à partir de ladite gouttière et l'utilisation dudit dispositif

(30) Priority: 05.12.2011 SE 1151153
(43) Date of publication of application: 12.06.2013
(73) Proprietor: Hammarlunda i Sverige AB, 237 21 BJÄRRED (SE)
(72) Inventor: Jansson, Jimmy, 240 35 Harlösa (SE)
(74) Representative: Persson, Albin

(56) References cited:
- FR-A1- 2 573 641
- JP-A- 6 191 453
- US-A- 3 314 636
- US-A1- 2007 114 337

## Description

### FIELD OF THE INVENTION

The invention relates to an assembly comprising a rain gutter and a device for suspending an object from said rain gutter. Rain gutters are used on buildings, such as domestic buildings, industry buildings and commercial buildings, to collect rain water from a surface, such as a roof, and conduct the rain water to a drainpipe or similar for further handling of the rain water. Rain gutters can be arranged along the base of a roof, i.e. the part of a roof projecting beyond an external wall. Rain gutters can be arranged in parallel with the base of the roof or can be somewhat inclined in relation thereto. The invention also relates to the use of the device.

### SUMMARY

The invention relates to an assembly comprising a rain gutter and a device for suspending an object from said rain gutter. The device makes it possible to suspend an object, such as a lamp, a hanging flowerpot, a hook, a mounting, a device for hanging, decorations, a bird table, bird food or similar types of objects, from the rain gutter. Hence, the object is another object than the rain gutter and is not part of the rain gutter. For example, the object can be suspended from the rain gutter by means of the device, so that the object is hanging down from underneath the rain gutter. The device can be arranged for connection to an existing rain gutter, such as a complete, assembled and functioning rain gutter.

US 2007/114337 A1 discloses an assembly according to the preamble of claim 1.

The device for suspending an object from the rain gutter comprises a first portion and a second portion displaceably connected to the first portion, wherein the first portion comprises a first hook for interaction with a first edge of the rain gutter and the second portion comprises a second hook for interaction with a second edge of the rain gutter, and wherein the second portion is connected to the first portion through a resilient element so that the second portion is resiliently displaceable in relation to the first portion, and a fastening element for connection to the object, so that the object can be suspended from underneath the rain gutter. Hence, a simple and reliable device for suspending an object from the rain gutter is obtained. The device can be detachably connectable to the rain gutter, wherein the device easily can be removed or moved along the rain gutter.

The first portion can be displaceable in relation to the second portion, so that a distance between the first hook and the second hook can be extended when a force overcoming the spring action is applied. Hence, the device can be extendable to facilitate mounting on the rain gutter while the spring action by the resilient element results in a reliable connection.

The first hook can be arranged at a first end of the first portion, wherein the device is terminated with the first hook in one end. The first hook can point outwards and downwards when the device is mounted on a drain gutter. Hence, the first hook can be hooked on to a first edge of a rain gutter having a flanged edge forming a space with an aperture along the rain gutter. The second hook can point inwards and downwards to extend over the other edge of the rain gutter from the outside and into the rain gutter.

The device comprises a fastening element for fixed or detachable connection to the object. The device can be arranged for running substantially perpendicular to an underside of the rain gutter, so that the object, for example, is hanging down from the underside of the rain gutter. Hence, the device is arranged for extending between an inner and an outer edge of the rain gutter in a direction perpendicular to the longitudinal direction of the rain gutter.

Further characteristics and advantages of different embodiment examples will become apparent from the description below, the appended drawings and dependent claims.

### BRIEF DESCRIPTION OF THE DRAWINGS

The invention will now be described more in detail with the aid of embodiment examples and with reference to the appended drawings, in which
Fig. 1 is a schematic side view of a device for an assembly according to one embodiment of the invention,
Fig. 2 is a schematic side view of an embodiment according to the invention comprising a rain gutter and the device according to Fig. 1 connected to the rain gutter,
Fig. 3 is a schematic perspective view of the device illustrated in Fig. 1,
Fig. 4 is a schematic perspective view of an embodiment according to the invention comprising a rain gutter and the device illustrated in Fig. 1 con-nected to the rain gutter,
Fig. 5 is a schematic side view of a device for an assembly according to one embodiment of the invention, in which the device is connected to an object in the form of a lamp,
Fig. 6 is a schematic side view of a device for an assembly according to one embodiment of the invention, in which the device is connected to an object in the form of a hanging flowerpot,
Fig. 7 is a schematic side view of a device for an assembly according to one embodiment of the invention, in which the device is connected to an object in the form of a hook,
Fig. 8-10 is a series of figures illustrating one example of the mounting of the device according to Fig. 1 on a rain gutter,
Fig. 11 is a schematic side view of a device for an assembly according to one alternative embodiment of the invention, in which the device is provided with a tongue for suspending an object,
Fig. 12 is a schematic perspective view of the device illustrated in Fig. 11,
Fig. 13 is a schematic perspective view of the device for an assembly according to one embodiment of the invention, in which a fastening element is illustrated in a first position,
Fig. 14 is a schematic perspective view of the device according to Fig. 13, in which the fastening element is illustrated in a second position,
Fig. 15 is a schematic side view of the device for an assembly according to one embodiment of the invention, in which a second portion is illustrated in a first position, and
Fig. 16 is a schematic side view of the device according to Fig. 15, in which the second portion is illustrated in a second position.

### DETAILED DESCRIPTION OF EMBODIMENT EXAMPLES

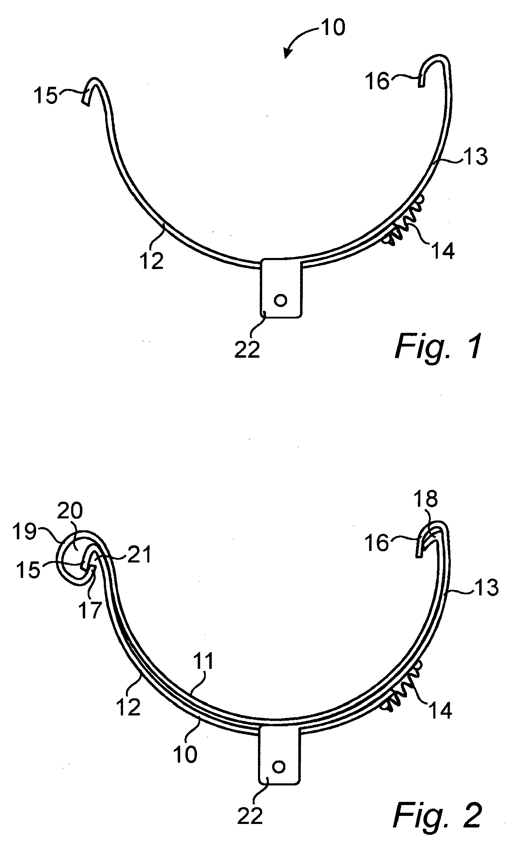

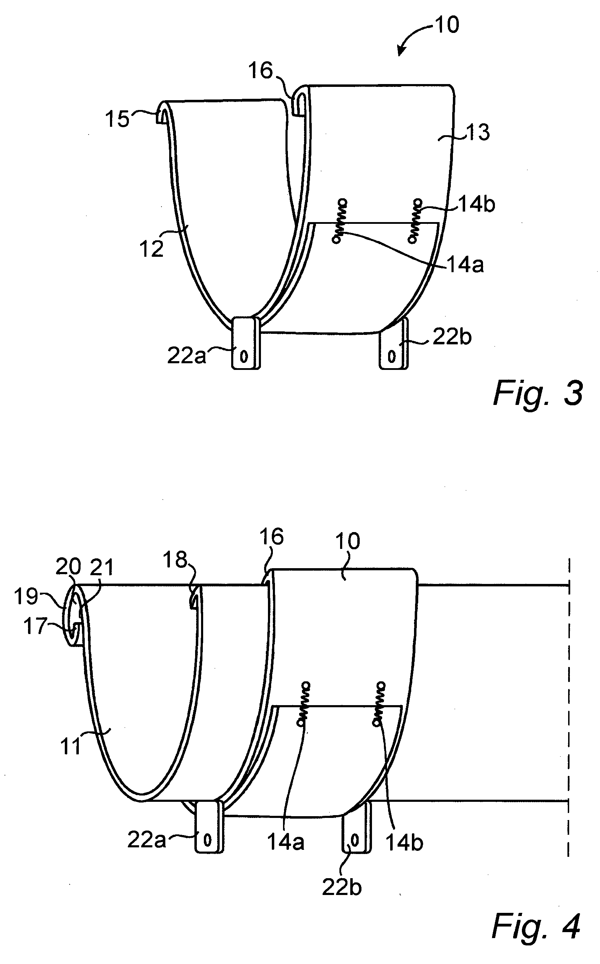

Referring to Figs. 1-4 a device 10 for suspending an object from a rain gutter 11 is illustrated. The device 10 is connected to the rain gutter 11 in Fig. 2 and Fig. 4. Fig. 2 and 4 illustrate an assembly according to one embodiment of the invention. For example, the device 10 is detachably connectable to the rain gutter 11.

The device 10 comprises a first portion 12 and a second portion 13 connected to the first portion 12. The second portion 13 is movably connected to the first portion 12 through at least one resilient element 14, wherein the second portion 13 is displaceable in relation to the first portion 12. The resilient element 14 is, for example, arranged as a spring, an elastic body or similar to provide spring action. For example, the first portion 12 and/or the second portion 13 or any part thereof is arranged in a resilient material to form the resilient element 14. For example, the device 10 comprises a first resilient element 14a and a second resilient element 14b, as illustrated in Figs. 3 and 4. Alternatively, the device 10 comprises a plurality of resilient elements 14. The resilient elements 14a, 14b are, for example, distributed over the width of the device 10. Hence, the resilient elements 14a, 14b can be arranged substantially in parallel.

The first portion 12 comprises a first hook 15, wherein the second portion comprises a second hook 16. The first hook 15 is arranged for interaction with a first edge 17 of the rain gutter 11, wherein the second hook 16 is arranged for interaction with an opposite second edge 18 of the rain gutter 11. Hence, the device 10 is arranged for connection to the rain gutter 11 by means of the hooks 15, 16. For example, the first edge 17 extends along a first long side of the rain gutter 11, wherein the second edge 18 extends along an opposite second long side of the rain gutter 11. For example, the first long side is an outer long side of the rain gutter 11, wherein the second long side is an inner long side of the rain gutter 11 facing a building. Hence, the device 10 is arranged for connection with both edges 17, 18 of the rain gutter 11 by means of the hooks 15, 16, wherein the device 10 extends substantially perpendicular to a longitudinal direction of the rain gutter 11, i.e. from an outer long side till an inner long side of the rain gutter 11. In the illustrated embodiment, the rain gutter 11 is arranged with a conventional flanged edge 19 which is terminated with the first edge 17, wherein the first edge 17 is arranged substantially upwards. For example, the flanged edge 19 forms an outer long side of the rain gutter 11. The flanged edge 19 forms a space 20 with an aperture 21 extending along the rain gutter 11. The first hook 15 is arranged to be inserted into the space 20 through the aperture 21, which is describe in more detail below.

For example, the first hook 15 projects outwards and downwards for interaction with the first edge 17 of the rain gutter 11. Alternatively, the first hook 15 is bent inwards and downwards to enclose the flanged edge 19. In the illustrated embodiment, the first hook 15 is arranged in a first end of the first portion 12. For example, the second hook 16 is bent inwards and downwards to enclose the second edge 18 of the rain gutter 11, so that the second hook 16 can be hanged onto the second edge 18 of the rain gutter 11. In the illustrated embodiment, the second hook 18 is arranged in a first end of the second portion 13.

In the illustrated embodiment, the first portion 12 is arranged with a form substantially corresponding to a part of the underside of the rain gutter 11, so that the first portion 12 extends along a part of the underside of the rain gutter 11 in a direction perpendicular to the longitudinal direction of the rain gutter 11. The first hook 15 is arranged for extending over the first edge 17 of the rain gutter 11, wherein the first portion 12 extends substantially from the first edge 17 and along the underside of the rain gutter 11 in a direction perpendicular to the longitudinal direction of the rain gutter 11. In the illustrated embodiment, also the second portion 13 is arranged with a form substantially corresponding to a part of the underside of the rain gutter 11, so that the second portion 13 extends along a part of the underside of the rain gutter 11 in a direction perpendicular to the longitudinal direction of the rain gutter 11 when the second hook 16 interacts with the second edge 18. In the illustrated embodiment the first and second portions 12, 13 overlap each other and are displaceable in relation to each other, so that the overlap can be reduced and a distance between the first hook 15 and the second hook 16 can increase. Hence, the device 10 is extendable by means of the resilient element 14.

The device 10 comprises a fastening element 22 for connection to an object. Hence, the device 10 is connectable to the the rain gutter 11 and an object for connecting the object to the rain gutter 11. For example, the fastening element 22 is detachably connectable to the object. Alternatively, the object is fixed to the device 10. In the illustrated embodiment, the fastening element 22 is connected to the second portion 13. Alternatively, the fastening element 22 is connected to the first portion 12. The fastening element 22 is, for example, connected to a second end of the second portion 13. As illustrated in Figs. 3 and 4 the device 10 comprises a first fastening element 22a and a second a fastening element 22b. The first and second fastening elements 22a, 22b project from opposite sides of the second portion 13 and form a groove for the first portion 12 to run in during displacement of the second portion 13 in relation to the first portion 12. For example, the fastening elements 22a, 22b project perpendicular to the longitudinal direction of the rain gutter 11. For example, the fastening elements 22a, 22b project downward from the long sides, respectively, of the second portion 13.

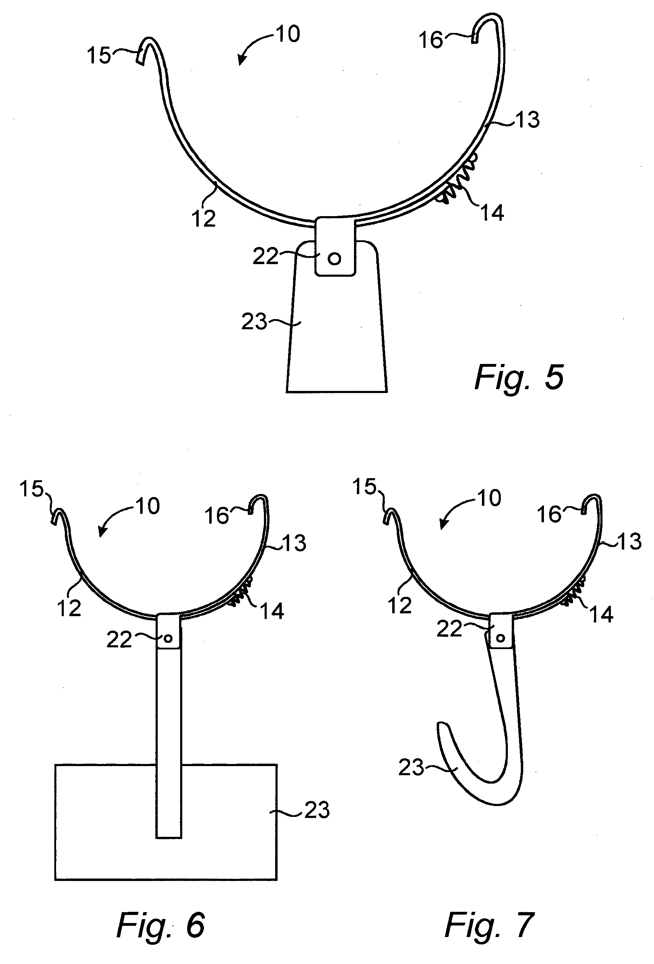

Referring to Figs. 5-7 some possible applications for the device 10 are illustrated. In Fig. 5 the fastening element 22 of the device 10 is connected to an object 23 in the form of a lamp. Alternatively, the object 23 is fixed to or detachably connectable to the device 10. In the illustrated embodiment the device 10 is arranged so that the object 23 is hanging down from the device 10 connected to the rain gutter 11. In Fig. 6 the fastening element 22 of the device 10 is connected to an object 23 in the form of a hanging flowerpot or any other type of container. In Fig. 7 the fastening element 22 of the device 10 is connected to an object 23 in form of a hook.

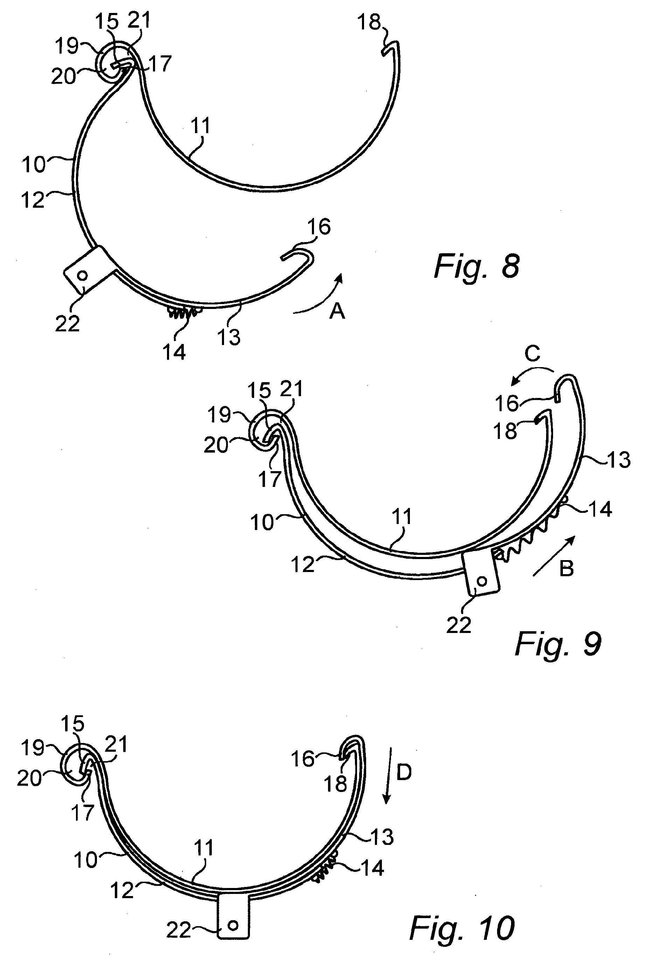

Referring to Figs. 8-10 connection of the device 10 to the rain gutter 11 is illustrated according to one example. First, the first hook 15 is hooked onto the first edge 17. For example, the first hook 15 is brought into the space 20 formed by the flanged edge 19, so that the first hook 15 runs through the aperture 21 and encloses the first edge 17, as illustrated in Fig. 8. Hence, the first hook 15 is brought through the aperture 21 and into the space to engage the first edge 17. Hence, the first hook 15 is arranged for engaging the first edge 17 of the rain gutter 11, so that the first hook 15 is hanging thereon. Alternatively, the first hook 15 is brought to enclose the flanged edge 19, so that the device 10 hangs on the flanged edge 19, which not is illustrated in the drawings. Hence, the first hook 15 is connectable to the rain gutter 11 by interaction with the first edge 17 of the rain gutter 11. In this position the device 10 can, for example, hang down from the rain gutter 11.

Subsequent to the first hook 15 being hooked onto the first edge 17 of the rain gutter 11 the device 10 is turned up towards the rain gutter 11, as illustrated by means of the arrow A in Fig. 8, so that the second portion 13 of the device 10 is turned up towards the rain gutter 11. For example, the device 10 is turned up towards the rain gutter 11 to a position illustrated in Fig. 9. The second portion 13 is displaced in relation to the first portion 12 in a direction towards the second edge 18 of the rain gutter 11, as illustrated by means of the arrow B in Fig. 9, so that the distance between the first hook 15 and the second hook 16 increases. The second portion 13 with the second hook 16 being displaced in relation to the first portion 12 and the first hook 15 in a longitudinal direction of the device 10, i.e. in a direction perpendicular to the longitudinal direction of the rain gutter 11, results in an extension of the device 10, so that the second hook 16 can be brought over the second edge 18 of the rain gutter 11, as illustrated by means of the arrow C in Fig. 9. Hence, an extension of the device 10 is obtained by the resilient element 14, so that the device 10 is provided with sufficient length for the second hook 16 to be able to reach over the second edge 18. When the second hook 16 has been brought over the second edge 18 of the rain gutter 11 and the second portion 13 no longer is forced to displacement, the second portion 13 with the second hook 16 is pulled back towards the first portion 12, as illustrated by means of the arrow D in Fig. 10, so that the second hook 16 engages the second edge 18. When the second hook 16 has been brought over the second edge 18 the second portion 13 is pulled back through the spring action of the resilient element 14, so that the distance between the hooks 15, 16 is reduced and the second hook 16 is hooked onto the second edge 18. For example, the first and second hook 15, 16 are pushed against the first and the second edges 17, 18, respectively, so that the device 10, by the spring action, is in a spring biased position when it is mounted on the rain gutter 11. The device 10, in a state of rest without being biased by the resilient element 14, is for example arranged with a length substantially corresponding to or is somewhat shorter than a length between the first edge 17 and the second edge 18. The resilient element 14 is arranged so that the device 10 is extendable to a length exceeding the distance between the first edge 17 and the second edge 18, so that the second hook 16 can be brought over the second edge 18.

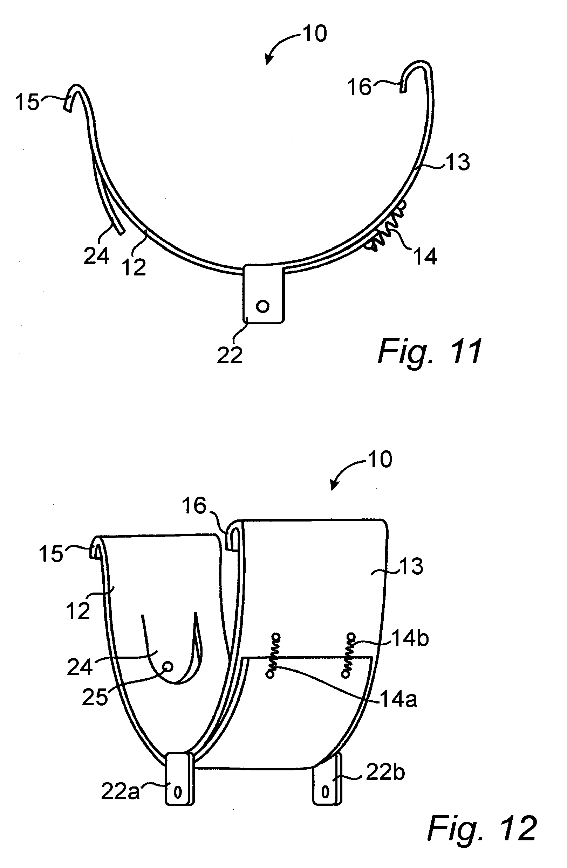

Referring to Fig. 11 and Fig. 12 an alternative embodiment of the invention is illustrated, in which the device 10 comprises a tongue 24 for suspending an object, such as a hanging flower pot, a net for bird food, bird table or any other optional object. The tongue 24 is, for example, arranged in the first portion 12. For example, the tongue 24 is arranged projecting from the first portion 12 in a direction substantially downwards. For example, the tongue can be turned or pivoted between a recessed idle position, in which the tongue 24 is recessed in the first portion 12, and a projecting position for use, in which the tongue 24 projects somewhat from the first portion 12. For example, the tongue 24 is provided with a hole 25 to facilitate connection to an object by means of a string or similar. The hole 25 can also be arranged to facilitate for the tongue 24 to be turned out. Alternatively, the tongue is provided with a pin or similar to facilitate connection to an object and possibly also facilitate for the tongue 24 to be turned in and out.

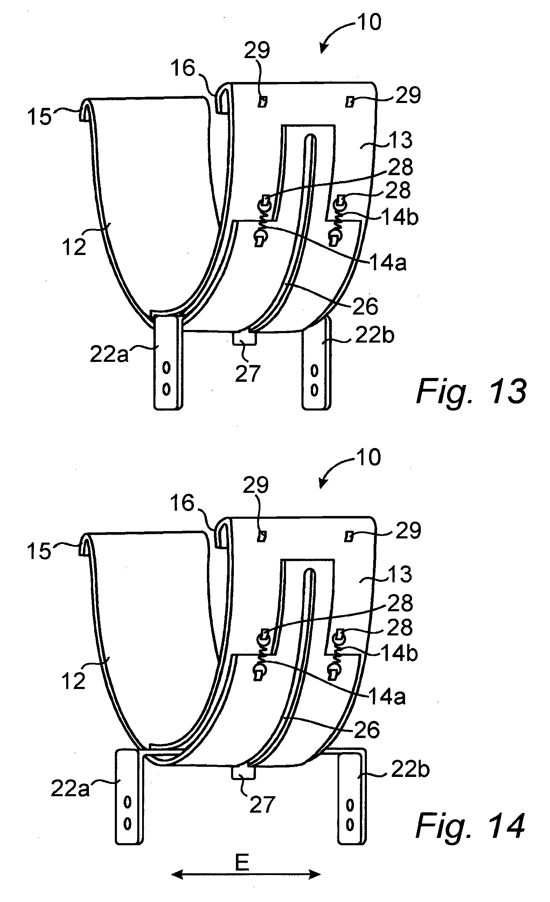

Referring to Figs. 13-14 one embodiment of the device 10 is illustrated in which the fastening element 22 is adjustable. According to the embodiment of Figs. 13 and 14 the fastening element 22 comprises the first fastening element 22a and the second fastening element 22b. The fastening elements 22a, 22b are arranged at a distance from each other, which distance is adjustable, so that lamps or other objects 23 having different widths are connectable to the fastening element 22. The fastening elements 22a, 22b are adjustable laterally, as illustrated by means of the arrow E in Fig. 14. The fastening elements 22a, 22b are connected to the portions 12, 13 by a fastening device 27, such as a nut interacting with a screw of the second portion 13, extending through a slot 26. Further, the fastening elements 22a, 22b are provided with a part extending between the first and second portions 12, 13 and having an elongated slot, which not is illustrated in the drawings, through which slot the fastening device 27 run, so that the fastening device 27 can be released, the fastening elements 22a, 22b be displaced to the desired position and then fastened by means of the fastening device 27. The slot 26 extends along the first portion 12, so that the first and second portions 12, 13 are displaceable in relation to each other while the fastening device 27 extends through the slot 26. For example, the fastening element 22 is replaceable.

For example, the fastening device 27 is arranged with a thinner portion, which can run through the slot 26, and a head being wider than the slot 26. The fastening device 27 is, for example, provided with a through aperture for interaction with a screw of the second portion 13, wherein the fastening device 27 can be turned around. Hence, the fastening device 27 can be arranged so that the thinner portion runs through the slot 26, wherein the portions 12, 13 are displaceable in relation to each other. Alternatively, the fastening device can be turned around, wherein the head of the fastening device 27 can pinch the first portion to the second portion or the parts of the fastening element 22 being arranged there between, so that the portions 12, 13 not is displaceable in relation to each other. In this way the device 10 can tolerate higher loads and heavier objects 23 can be suspended therefrom.

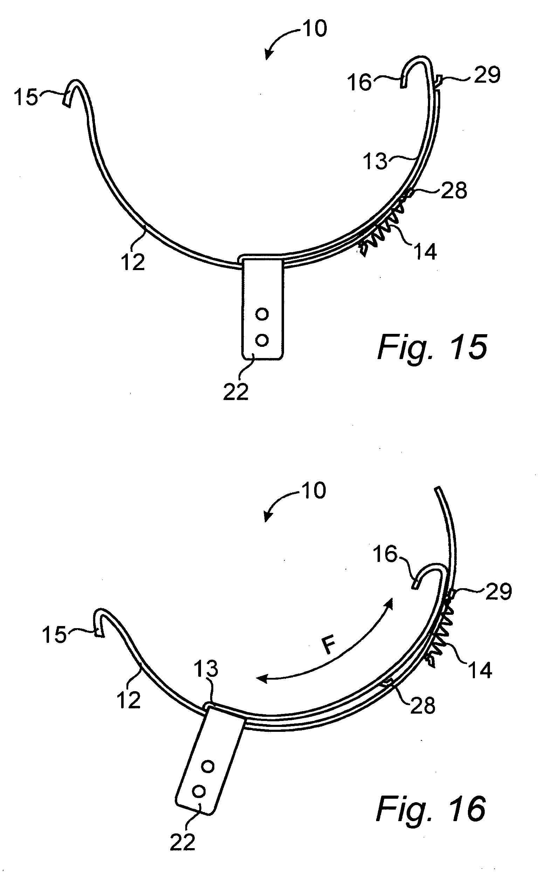

According to one embodiment the device 10 is adjustable to fit different types of rain gutters 11, such as rain gutters having a diameter of 100, 125 and 150 mm. In the illustrated embodiment the second portion 13 is provided with a first hitch or first hitches 28 and a second hitch or second hitches 29 for detachable connection to the resilient element 14 or the resilient elements 14a, 14b. For example, the second portion 13 is provided with additional hitches. De first hitches 28 are arranged at a first distance to the second hook 16 and de second hitches 29 are arranged at a second distance to the second hook 16, wherein the first distance is greater than the second distance. Hence, the resilient elements 14a, 14b can be released from the first hitches 28, wherein the first portion 12 can be displaced while bringing along the resilient elements 14a, 14b and be connected to de second hitches 29. Hence, the device 10 is adjustable, so that the distance between the first and second hooks 15, 16 are adjustable, as illustrated by means of the arrow E in Fig. 16.

## Claims

1. Assembly comprising a rain gutter (11) and a device (10) for suspending an object (23) from said rain gutter (11), wherein the device (10) is connected to the rain gutter (11), wherein the device (10) comprises
a first portion (12) and a second portion (13) displaceably connected to the first portion (12), wherein the first portion (12) comprises a first hook (15) for interaction with a first edge (17) of the rain gutter (11), and the second portion (13) comprises a second hook (16) for interaction with a second edge (18) of the rain gutter (11), and wherein the device (10) comprises
a fastening element (22) for connection to the object (23), so that the object (23) can be suspended from underneath the rain gutter (11) **characterised in that** the second portion (13) is connected to the first portion (12) through a resilient element (14) so that the second portion (13) is resiliently displaceable in relation to the first portion (12).

2. An assembly according to claim 1, wherein the resilient element (14) is detachably connectable to the second portion (13) in different positions, so that the device is adjustable to rain gutters having different size.

3. An assembly according to claim 2, wherein the resilient element (14) is detachably connectable to a first hitch (28) arranged on the second portion (13) at a first distance from the second hook (16) and a second hitch (29) arranged on the second portion (13) at a second distance from the second hook (16), wherein the first distance is greater than the second distance.

4. An assembly according to claim 2, wherein the second portion (13) is connected to the first portion (12) by a fastening device arranged through an elongated slot (26) of the first portion (12).

5. An assembly according to any of the preceding claims, wherein the fastening element (22) is detachably connectable to the first and second portions (12, 13), so that the fastening element (22) is replaceable.

6. An assembly according to any of the preceding claims, wherein the fastening element (22) comprises a first fastening element (22a) and a second a fastening element (22b) arranged at a distance from the first fastening element (22a), and wherein the distance between the fastening elements (22a, 22b) is adjustable.

7. An assembly according to any of the preceding claims, wherein the first hook (15) projects substantially in the same direction as the second hook (16), so that the first hook (15) extends outwards and downwards and wherein the second hook (16) extends inwards and downwards.

8. Use of a device (10) as defined in any of the preceding claims for suspending an object from a rain gutter, so that the object is hanging down from an underside of the rain gutter.

9. Use according to claim 8, wherein the object is a lamp, a hanging flowerpot, a hook, a mounting, a clip, a device for hanging, a decoration, a bird table or bird food.

10. Use according to claim 9, wherein the object is a lamp.

## Patentansprüche

1. Anordnung, aufweisend eine Regenrinne (11) und eine Vorrichtung (10) zum Hängen eines Objekts (23) von der Regenrinne (11), wobei die Vorrichtung (10) mit der Regenrinne (11) verbunden ist, wobei die Vorrichtung (10) aufweist:
einen ersten Abschnitt (12) und einen zweiten Abschnitt (13), der verschiebbar mit dem ersten Abschnitt (12) verbunden ist, wobei der erste Abschnitt (12) einen ersten Haken (15) aufweist, um mit einer ersten Kante (17) der Regenrinne (11) zusammenzuwirken, und wobei der zweite Abschnitt (13) einen zweiten Haken (16) aufweist, um mit einer zweiten Kante (18) der Regenrinne (11) zusammenzuwirken, und wobei die Vorrichtung (10) ein Befestigungselement (22) zur Verbindung mit dem Objekt (23) aufweist, so dass das Objekt (23) von unterhalb der Regenrinne (11) gehängt werden kann, **dadurch gekennzeichnet, dass** der zweite Abschnitt (13) mit dem ersten Abschnitt (12) durch ein elastisches Element (14) verbunden ist, so dass der zweite Abschnitt (13) elastisch im Verhältnis zu dem ersten Abschnitt (12) verschiebbar ist.

2. Anordnung nach Anspruch 1, wobei das elastische Element (14) in verschiedenen Positionen abnehmbar mit dem zweiten Abschnitt (13) verbunden werden kann, so dass die Vorrichtung an Regenrinnen mit verschiedener Größe angepasst werden kann.

3. Anordnung nach Anspruch 2, wobei das elastische Element (14) abnehmbar mit einer ersten Kupplung (28) verbunden werden kann, die an dem zweiten Abschnitt (13) in einer ersten Entfernung von dem zweiten Haken (16) angebracht ist, und mit einer zweiten Kupplung (29) verbunden werden kann, die an dem zweiten Abschnitt (13) in einer zweiten Entfernung von dem zweiten Haken (16) angebracht ist, wobei die erste Entfernung größer ist als die zweite Entfernung.

4. Anordnung nach Anspruch 2, wobei der zweite Abschnitt (13) mit dem ersten Abschnitt (12) durch eine Befestigungsvorrichtung, die durch einen verlängerten Schlitz (26) des ersten Abschnitts (12) angeordnet ist, verbunden wird.

5. Anordnung nach einem der vorgenannten Ansprüche, wobei das Befestigungselement (22) abnehmbar mit den ersten und zweiten Abschnitten (12, 13) verbunden werden kann, so dass das Befestigungselement (22) ersetzbar ist.

6. Anordnung nach einem der vorgenannten Ansprüche, wobei das Befestigungselement (22) ein erstes Befestigungselement (22a) und ein zweites Befestigungselement (22b), das in einer Entfernung von dem ersten Befestigungselement (22a) angeordnet ist, aufweist, und wobei die Entfernung zwischen den Befestigungselementen (22a, 22b) einstellbar ist.

7. Anordnung nach einem der vorgenannten Ansprüche, wobei der erste Haken (15) im Wesentlichen in dieselbe Richtung ragt wie der zweite Haken (16), so dass der erste Haken (15) nach außen und unten verläuft und wobei der zweite Haken (16) nach innen und unten verläuft.

8. Verwendung einer Vorrichtung (10) wie in einem der vorgenannten Ansprüche beschrieben, um ein Objekt von einer Regenrinne zu hängen, so dass das Objekt von einer Unterseite der Regenrinne herabhängt.

9. Verwendung nach Anspruch 8, wobei das Objekt eine Lampe, ein hängender Blumentopf, ein Haken, eine Befestigung, eine Klemme, eine Hängevorrichtung, eine Dekoration, ein Vogelnapf oder Vogelfutter ist.

10. Verwendung nach Anspruch 9, wobei das Objekt eine Lampe ist.

## Revendications

1. Ensemble comprenant une gouttière (11) et un dispositif (10) destiné à suspendre un objet (23) à partir de ladite gouttière (11), dans lequel le dispositif (10) est raccordé à la gouttière (11), où le dispositif (10) comprend
une première partie (12) et une deuxième partie (13) raccordée avec possibilité de déplacement à la première partie (12), où la première partie (12) comprend un premier crochet (15) en vue d'une interaction avec un premier bord (17) de la gouttière (11), et la deuxième partie (13) comprend un deuxième crochet (16) en vue d'une interaction avec un deuxième bord (18) de la gouttière (11), et où le dispositif (10) comprend
un élément de fixation (22) en vue d'un raccordement à l'objet (23), de sorte que l'objet (23) peut être suspendu à partir du dessous de la gouttière (11) **caractérisé en ce que** la deuxième partie (13) est raccordée à la première partie (12) par l'intermédiaire d'un élément élastique (14) de sorte que la deuxième partie (13) peut être déplacée de manière élastique par rapport à la première partie (12).

2. Ensemble selon la revendication 1, dans lequel l'élément élastique (14) peut être raccordé de manière amovible à la deuxième partie (13) selon différentes positions, de sorte que le dispositif peut être ajusté sur des gouttières ayant une taille différente.

3. Ensemble selon la revendication 2, dans lequel l'élément élastique (14) peut être raccordé de manière amovible à une première griffe (28) agencée sur la deuxième partie (13) à une première distance du deuxième crochet (16) et à une deuxième griffe (29) agencée sur la deuxième partie (13) à une deuxième distance du deuxième crochet (16), où la première distance est supérieure à la deuxième distance.

4. Ensemble selon la revendication 2, dans lequel la deuxième partie (13) est raccordée à la première partie (12) par un dispositif de fixation agencé par l'intermédiaire d'une fente allongée (26) de la première partie (12).

5. Ensemble selon l'une quelconque des revendications précédentes, dans lequel l'élément de fixation (22) peut être raccordé de manière amovible aux première et deuxième parties (12, 13), de sorte que l'élément de fixation (22) peut être remplacé.

6. Ensemble selon l'une quelconque des revendications précédentes, dans lequel l'élément de fixation (22) comprend un premier élément de fixation (22a) et un deuxième élément de fixation (22b) agencé à une certaine distance du premier élément de fixation (22a), et dans lequel la distance entre les éléments de fixation (22a, 22b) peut être ajustée.

7. Ensemble selon l'une quelconque des revendications précédentes, dans lequel le premier crochet (15) fait saillie sensiblement dans le même sens que le deuxième crochet (16), de sorte que le premier crochet (15) s'étend vers l'extérieur et vers le bas et dans lequel le deuxième crochet (16) s'étend vers l'intérieur et vers le bas.

8. Utilisation d'un dispositif (10) tel que défini selon l'une quelconque des revendications précédentes en vue de suspendre un objet à partir d'une gouttière, de sorte que l'objet pend à partir du dessous de la gouttière.

9. Utilisation selon la revendication 8, où l'objet est une lampe, un pot de fleurs à suspendre, un crochet, une armature, une attache, un dispositif de suspension, une décoration, une mangeoire pour oiseaux ou de la nourriture pour oiseaux.

10. Utilisation selon la revendication 9, où l'objet est une lampe.
